# FASCICULE DE BREVET EUROPEEN

(11) **EP 3 491 715 B1**
(45) Date de publication et mention de la délivrance du brevet: **20.08.2025**
(21) Numéro de dépôt: 17758590.8
(22) Date de dépôt: 27.07.2017
(51) Int. Cl.: H02K 3/28, H02K 3/52, H02K 15/095

(54) **MACHINE ÉLECTRIQUE TOURNANTE MUNIE D'UN BOBINAGE À CONFIGURATION AMÉLIORÉE**
MIT EINER WICKLUNG MIT VERBESSERTER KONFIGURATION AUSGESTATTETE, ROTIERENDE ELEKTRISCHE MASCHINE
ROTATING ELECTRICAL MACHINE FITTED WITH A WINDING HAVING IMPROVED CONFIGURATION

(30) Priorité: 29.07.2016 FR 1657360
(43) Date de publication de la demande: 05.06.2019
(73) Titulaire: Valeo Electrification, 95800 Cergy (FR)
(72) Inventeur: LABASTE-MAUHE, Laurent, 94046 Creteil Cedex (FR); BRISSET, Anthony, 78322 Le Mesnil Saint Denis Cedex (FR); PAGNARD, Maxime, 94046 Creteil Cedex (FR); LORET, Benjamin, 94046 Creteil Cedex (FR); QUITSCH, Cordula, 94046 Creteil Cedex (FR); BOUGRASSA, Aziz, 94046 Creteil Cedex (FR); BOUGRASSA, Omar, 94046 Creteil Cedex (FR)
(74) Mandataire: Valeo Powertrain Systems
(86) Numéro de dépôt international: PCT/FR2017/052104
(87) Numéro de publication internationale: WO 2018/020167

(56) Documents cités:
- WO-A1-2016/088989
- WO-A1-2016/088989
- DE-A1- 102013 111 868
- DE-A1- 102013 111 868
- DE-A1- 102014 003 055
- DE-A1- 102015 200 086
- JP-A- 2007 252 076
- JP-A- 2007 252 076
- JP-A- 2009 148 020
- JP-A- 2009 148 020
- JP-A- 2012 244 773
- JP-A- 2012 244 773
- JP-A- H11 215 729
- JP-A- H11 215 729
- KR-A- 20150 030 333
- KR-A- 20150 030 333
- US-A1- 2003 155 834
- US-A1- 2003 155 834

## Description

L'invention porte sur une machine électrique tournante munie d'un bobinage à configuration améliorée.

L'invention trouve une application particulièrement avantageuse, mais non exclusive, dans le domaine des machines électriques fonctionnant en mode moteur pour assurer l'entraînement en rotation des ventilateurs de véhicule automobile.

De tels ventilateurs installés en façade avant du véhicule sont destinés à générer un flux d'air traversant un empilement d'échangeurs thermiques comme par exemple un refroidisseur moteur et un condenseur de climatisation positionnés l'un derrière l'autre.

A cet effet, ces ventilateurs comportent une hélice entraînée en rotation par un rotor en forme de cloche positionné autour d'un stator à dents extérieures. En effet, le stator comporte un corps muni d'une pluralité de dents réparties angulairement de manière régulière sur une périphérie externe de la culasse.

Un bobinage polyphasé inséré dans les encoches du stator est obtenu par exemple à partir de bobines individuelles enroulées chacune autour d'une dent du stator. Un interconnecteur comportant une pluralité de traces de couplage assure un couplage entre des bobines de différentes phases. A cet effet, les traces de couplage sont munies de languettes de connexion sur lesquelles sont soudées des extrémités de bobines.

Des machines à 18 bobines avec un rotor à 12 pôles sont connus de l'état de la technique, notamment par les documents JP2007252076 A et JPH11215729.

Parmi l'état de la technique, le document DE102013111868 A1 divulgue une machine à rotor interne dont le bobinage du stator est formé d'un seul fil d'enroulement.Le document WO2016088989 A1 divulgue une machine à rotor externe comprenant un interconnecteur assemblé sur un isolant de bobines.

Les configurations de machines connues à 15 bobines et 10 pôles imposent l'utilisation d'un fil de diamètre important (de l'ordre de 2mm) pour obtenir les performances souhaitées de la machine. Cela rend toutefois les opérations de bobinage difficiles principalement en raison de la taille des encoches du stator et laisse peu de choix quant à l'approvisionnement d'un tel fil proposé par peu de fournisseurs. En outre, le bruit magnétique généré par la machine est relativement important.

L'invention vise à remédier efficacement à ces inconvénients en proposant une machine électrique tournante selon la revendication 1.

L'invention permet de faciliter la réalisation du bobinage en autorisant l'utilisation d'un fil de faible diamètre dont l'approvisionnement pourra être effectué aisément auprès de différents fournisseurs. L'invention permet en outre de procurer une bonne adaptabilité de la machine électrique à la puissance requise. Une telle configuration minimise également le bruit magnétique généré par la machine électrique et limite l'encombrement d'une telle machine.

Une configuration de machine électrique tournante à 18 bobines et 12 pôles est donc un bon compromis entre l'encombrement, la puissance, le bruit magnétique, la simplicité et la rapidité du procédé de bobinage.

En effet, une configuration de machine électrique tournante à 15 bobines et 10 pôles ou une configuration de machine électrique tournante à 12 bobines et 8 pôles nécessite d'avoir un gros diamètre de fil afin de garantir la puissance de la machine et ce diamètre de fil entraine une augmentation de l'encombrement de ladite machine.

De plus, une machine électrique tournante à 21 bobines et 14 pôles engendre un procédé de bobinage très long et plus complexe. En effet, une telle configuration de machine nécessite de réaliser un grand nombre de soudures.

En outre, le fait d'utiliser un même fil continu pour former toutes les bobines du stator permet de minimiser le temps de cycle pour la réalisation du bobinage.

Selon une réalisation, au moins deux bobines de deux phases différentes sont couplées entre elles par une portion de couplage continue de fil reliant les deux bobines entre elles et connectée à une trace de couplage correspondante d'un interconnecteur.

Selon une réalisation, chaque bobine est formée par un fil dont le diamètre est inférieur à 1.5mm.

Selon une réalisation, le bobinage est un bobinage triphasé formé à partir de trois ensembles de bobines couplés en triangle.

Selon une réalisation, chaque ensemble comporte trois branches montées électriquement en parallèle, chaque branche ayant deux bobines connectées électriquement en série. Cette configuration permet d'utiliser un diamètre de fil faible, par exemple de l'ordre de 1,2mm ce qui permet pour une puissance donnée de diminuer l'encombrement de la machine électrique tournante.

Selon une réalisation, chaque ensemble comporte deux branches montées électriquement en parallèle, chaque branche ayant trois bobines connectées électriquement en série. Cette configuration permet de réduire le nombre de couplage nécessaire pour l'interconnexion et ainsi de réduire la durée du procédé de bobinage du stator de la machine électrique tournante.

Selon une réalisation, chaque ensemble comporte six bobines connectées électriquement en parallèle.

Selon une réalisation, chaque ensemble comporte six bobines connectées électriquement en série.

Selon une réalisation, les pôles du rotor sont formés par des aimants permanents.

Selon une réalisation, la machine électrique tournante est une machine sans balais à courant continu.

L'invention a également pour objet un ventilateur pour véhicule automobile caractérisé en ce qu'il comporte une machine électrique tournante telle que précédemment définie.

L'invention sera mieux comprise à la lecture de la description qui suit et à l'examen des figures schématiques qui l'accompagnent. Ces figures ne sont données qu'à titre illustratif mais nullement limitatif de l'invention.
La figure 1 est une vue en perspective de la machine électrique tournante selon la présente invention;
La figure 2 est une vue en perspective d'une partie du stator à dents externes appartenant à la machine électrique tournante de la figure 1;
Les figures 3a et 3b sont des vues en perspective respectivement de dessus et de dessous d'un stator bobiné selon la présente invention muni d'un interconnecteur à traces de couplage surmoulées;
La figure 4 est une vue en perspective de dessus illustrant une variante de réalisation du stator bobiné selon la présente invention muni d'un interconnecteur à traces de couplage encliquetées;
La figure 5 est une vue en perspective détaillée du dispositif d'encliquetage utilisé pour fixer les traces de couplage au corps de l'interconnecteur de la figure 4;
La figure 6 est un schéma électrique illustrant un premier type de couplage en triangle des bobines du stator selon l'invention;
La figure 7 est une vue schématique de la face avant du stator située du côté de l'interconnecteur illustrant le positionnement des portions de couplage entre les bobines des différentes phases pour le montage de la figure 6;
La figure 8 est une vue schématique de la face arrière du stator illustrant l'implantation des portions de routage entre les bobines d'une même phase pour le montage de la figure 6;
Les figures 9a et 9b sont des schémas électriques illustrant des variantes de couplage en triangle des bobines du stator selon l'invention;
Les figures 10a et 10b sont des vues en perspective de dessus et de dessous de l'interconnecteur selon la présente invention;
La figure 11 est une vue de dessus des traces de couplage appartenant à l'interconnecteur selon la présente invention;
La figure 12 est une vue en perspective d'une trace de couplage selon la présente invention;
La figure 13 est une vue en coupe d'une languette de connexion appartenant à une trace de couplage de l'interconnecteur selon l'invention;
La figure 14 est une vue en perspective de l'isolant de bobines plaqué contre la face d'extrémité arrière du stator selon l'invention;
La figure 15 est une vue en perspective du rotor de la machine électrique tournante selon la présente invention.

Les éléments identiques, similaires ou analogues conservent la même référence d'une figure à l'autre. Dans la description qui suit, le côté dit "avant" du stator est situé du côté de l'interconnecteur et le côté dit "arrière" est situé du côté axial opposé.

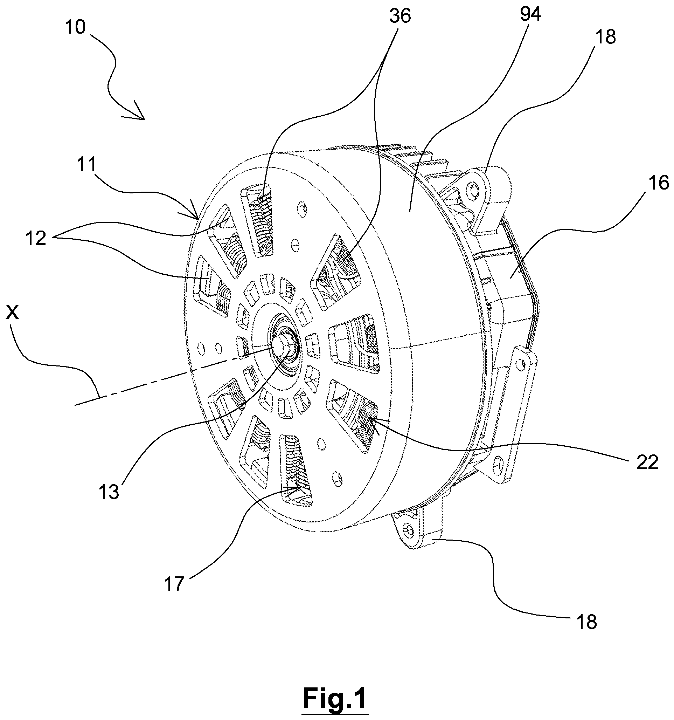

La figure 1 montre un exemple de machine électrique tournante 10. Dans cet exemple, il s'agit d'une machine électrique tournante sans balais à courant continu également appelée « Brushless direct curent » (BLDC) en anglais.

La machine électrique tournante 10 comporte un rotor 11 en forme de cloche sur lequel est destinée à être fixée une hélice (non représenté). Le rotor 11 porte sur sa périphérie interne une pluralité d'aimants permanents 12 formant les pôles de la machine 10. Le rotor 11 est monté rotatif sur un arbre 13 issu d'un dissipateur thermique 16 lequel contient un module électronique de commande de la machine 10.

Ce rotor 11 entoure un stator 17 polyphasé avec présence d'un entrefer entre la périphérie interne du rotor 11 et la périphérie externe du stator 17.

Ce stator 17 d'axe X est fixé au dissipateur thermique 16 destiné à être monté sur une pièce de support, dite buse, portant des échangeurs de chaleur du véhicule, tels que le refroidisseur du moteur thermique et le condenseur de climatisation. A cet effet, des organes de fixation traversent des ouvertures réalisées dans des oreilles saillantes 18 issues d'une périphérie externe du dissipateur thermique 16.

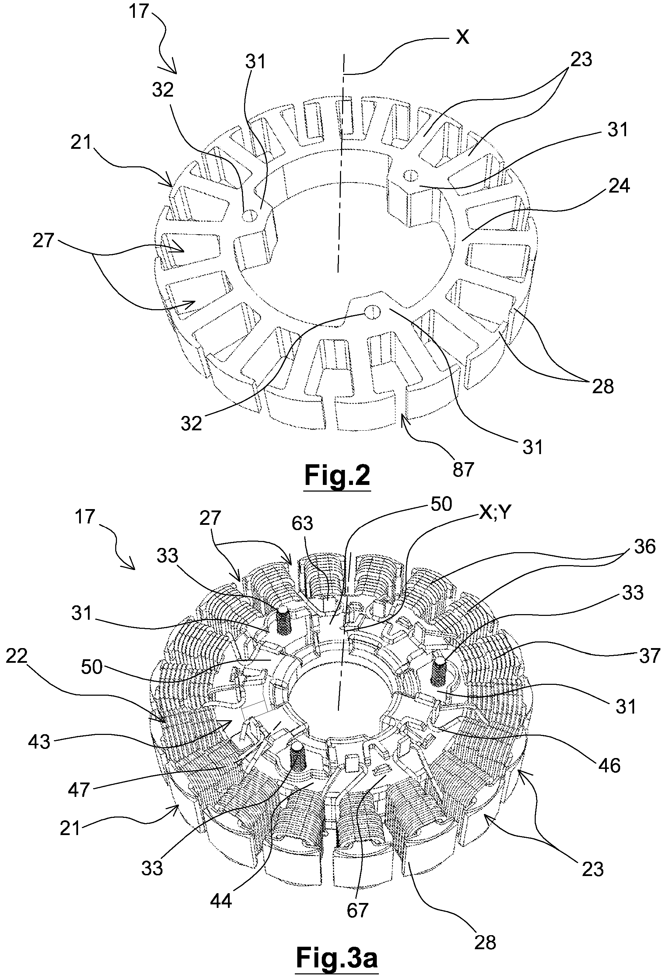

Le stator 17 comporte un corps 21 et un bobinage 22. Plus précisément, comme cela est visible sur la figure 2, le corps de stator 21 consiste par exemple en un empilement axial de tôles planes. Le corps 21 comporte des dents 23 réparties angulairement de manière régulière sur une périphérie externe d'une culasse 24. Ces dents 23 délimitent des encoches 27, de telle façon que chaque encoche 27 est délimitée par deux dents 23 successives. La culasse 24 correspond ainsi à la portion annulaire interne pleine du corps 21 qui s'étend entre le fond des encoches 27 et la périphérie interne du stator 17. Les encoches 27 débouchent axialement dans les faces d'extrémité axiales du corps 21. Les encoches 27 sont également ouvertes radialement vers l'extérieur du corps 21.

Dans cet exemple, le stator 17 est muni de pieds de dent 28 du côté des extrémités libres des dents 23. Chaque pied de dent 28 s'étend circonférentiellement de part et d'autre d'une dent 23 correspondante.

Le stator 17 comporte également des parties 31 issues de la périphérie interne de la culasse 24 s'étendant en saillie radiale vers l'intérieur de la culasse 24. Chaque partie en saillie 31 comporte une ouverture axiale 32 traversante dans laquelle pénètre un organe de fixation 33, par exemple une vis tel que montré sur la figure 3a, pour assurer la fixation du stator 17 sur le dissipateur thermique 16.

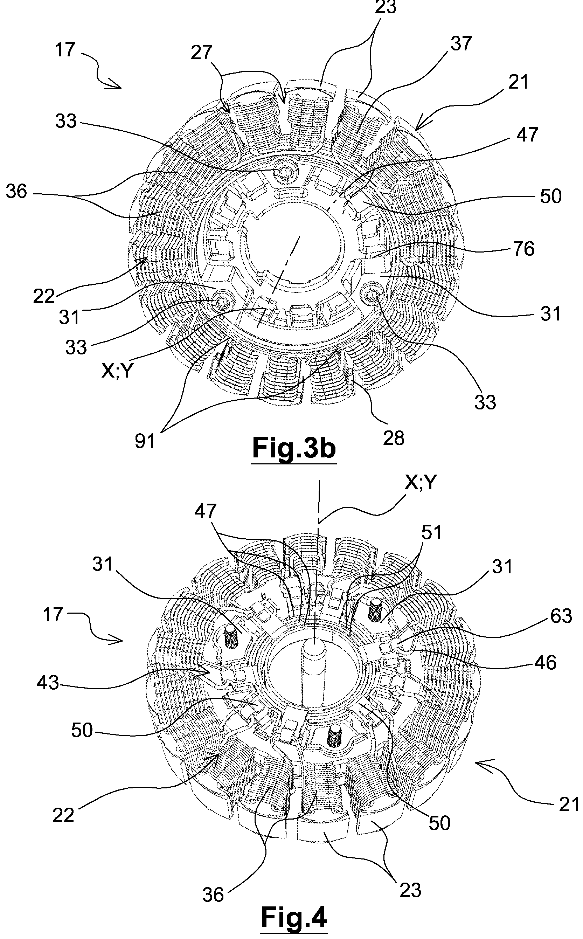

Pour obtenir le bobinage 22, plusieurs phases sont formées par des bobines 36 enroulées chacune autour d'une dent 23 correspondante du corps 21 de stator 17, comme cela est illustré par les figures 3a, 3b, et 4.

Suivant une configuration préférée, le bobinage 22 de type triphasé est formé par 18 bobines 36 et le rotor 11 comporte 12 pôles soit 12 aimants permanents. Les 18 bobines sont formées à partir d'un même fil 37 continu dont le diamètre est inférieur à 1.5mm. Par exemple, ce fil 37 peut avoir un diamètre de l'ordre de 1.2mm. Le fil 37 électriquement conducteur est de préférence recouvert d'une couche de matériau électriquement isolant tel que de l'émail.

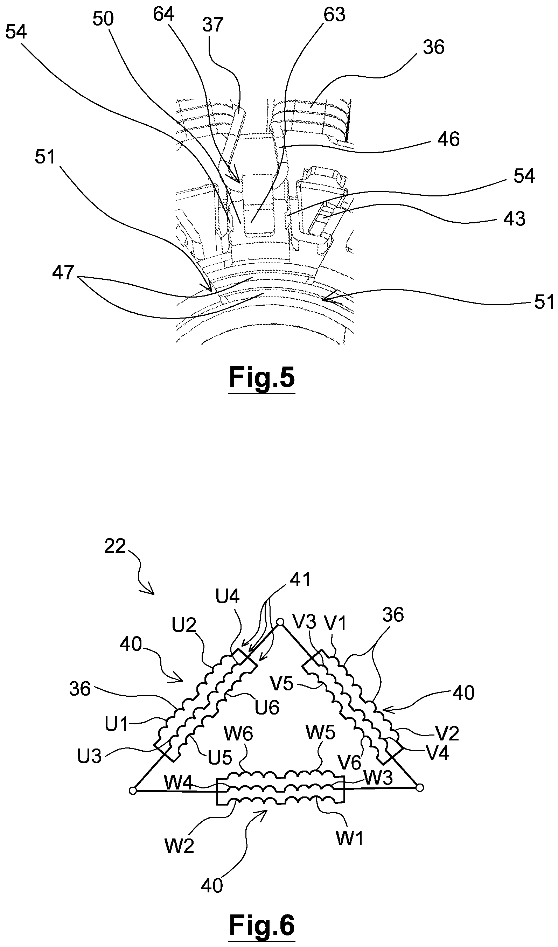

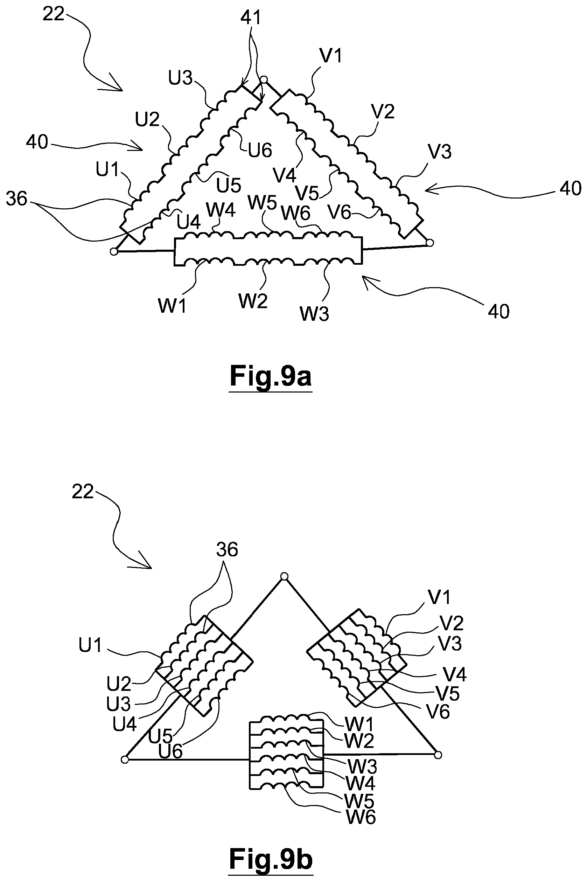

Avantageusement, le bobinage 22 est un bobinage triphasé formé à partir de trois ensembles 40 de bobines 36 couplés en triangle. Suivant un premier mode de réalisation montré à la figure 6, chaque ensemble 40 comporte trois branches 41 montées électriquement en parallèle, chaque branche 41 ayant deux bobines 36 connectées électriquement en série. Suivant un deuxième mode de réalisation montré à la figure 9a, chaque ensemble 40 comporte deux branches 41 montées électriquement en parallèle, chaque branche 41 ayant trois bobines 36 connectées électriquement en série. Suivant un troisième mode de réalisation montré à la figure 9b, chaque ensemble 40 comporte six bobines 36 connectées électriquement en parallèle. Suivant un quatrième mode de réalisation non représenté, chaque ensemble 40 comporte six bobines 36 connectées électriquement en série.

Un interconnecteur 43 montré sur les figures 3a, 3b, 4, 10a et 10b assure un couplage entre des bobines 36 de différentes phases U, V, W via leur portion de couplage 46. Chaque portion de couplage 46 correspond ainsi à une portion du fil 37 s'étendant entre deux bobines 36 de phases différentes et reliées électriquement à l'interconnecteur 43.

Plus précisément, l'interconnecteur 43 d'axe Y comporte un corps 44, réalisé dans un matériau électriquement isolant par exemple en matière plastique, et une pluralité de traces de couplage 47 munies de languettes de connexion 50 sur lesquelles sont soudées les portions de couplage 46 qui auront préalablement été dénudées de leur émail. Il est à noter que lorsque l'interconnecteur 43 est monté sur le stator 17, son axe Y est sensiblement confondu avec l'axe X du stator 17.

Dans le mode de réalisation des figures 3a et 3b, le corps 44 est surmoulé sur les traces de couplage 47.

Alternativement, comme cela est représenté sur les figures 4 et 5, les traces de couplage 47 en forme d'anneau ouvert, sont insérées dans des rainures 51 circulaires du corps 44 de forme correspondante. Les traces de couplage 47 sont maintenues à l'intérieur des rainures 51 par exemple par encliquetage. A cet effet, un bord radial des languettes de connexion 50 vient en appui contre des rampes 54 ménagées dans des faces de l'interconnecteur 43 délimitant des logements radiaux pour les languettes de connexion 50. Les rampes 54 sont ici réalisées dans deux faces en vis-à-vis du corps 44 s'étendant suivant une direction sensiblement radiale.

On distingue une première trace de couplage 47 assurant le couplage entre les bobines 36 d'une première phase U référencées U1-U6 et les bobines 36 d'une deuxième phase V référencées V1-V6, une deuxième trace de couplage 47 assurant le couplage entre les bobines 36 de la phase V référencées V1-V6 et les bobines 36 d'une troisième phase W référencées W1-W6, et une troisième trace de couplage 47 assurant un couplage entre les bobines 36 de la phase U référencées U1-U6 et les bobines 36 de la phase W référencées W1-W6. Le nombre de traces de couplage 47 pourra bien entendu être adapté en fonction du nombre de phases de la machine électrique.

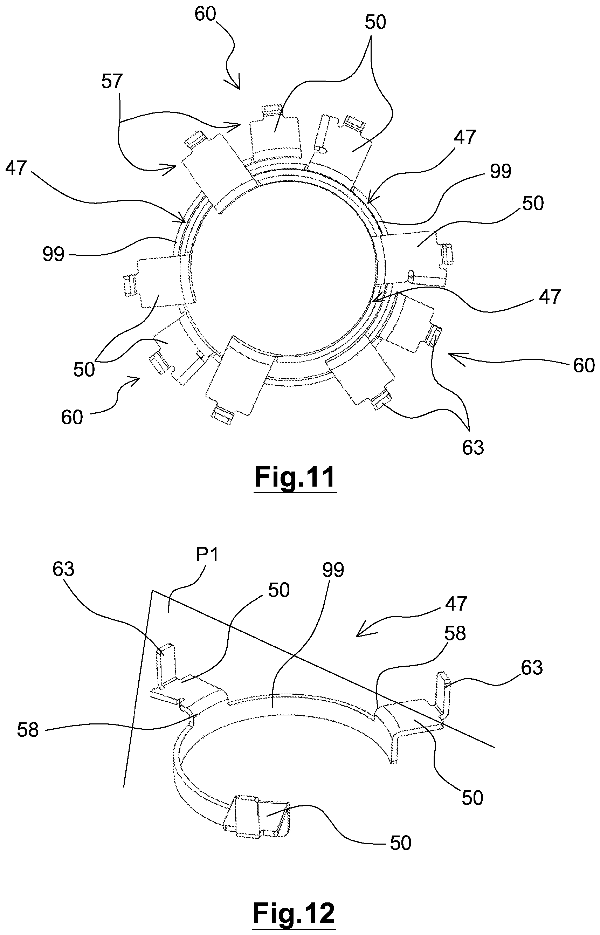

Comme cela est visible sur l'exemple de la figure 11, les traces de couplage 47 de diamètres différents sont coaxiales et empilées radialement les unes par rapport aux autres. Les traces 47 sont espacées radialement les unes par rapport aux autres, de telle façon qu'il existe une couche de matériau électriquement isolant entre deux traces 47 adjacentes pour assurer leur isolation électrique. La couche isolante pourra être constituée par une partie du corps 44 surmoulé pour le mode de réalisation des figures 3a et 3b ou une paroi isolante délimitant une rainure 51 pour le mode de réalisation des figures 4 et 5.

De préférence, la trace de couplage 47 de plus grand diamètre de l'interconnecteur 43 présente un diamètre externe inférieur au diamètre interne de la culasse 24 du corps de stator 21.

En outre, chaque trace de couplage 47 présente un corps 99 qui peut présenter un allongement axial supérieur à son allongement radial pour présenter une forme d'anneau s'étendant de façon axiale par rapport à l'axe X du stator 17. De préférence, le corps 99 présente une forme d'arc de cercle.

Les traces de couplage 47 sont positionnées axialement entre deux extrémités axiales du bobinage 22, tel que montré sur les figures 3a et 3b. Autrement dit, les extrémités axiales de la partie annulaire des traces de couplage 47 considérée sans les languettes de connexion 50 sont positionnées entre les portions axiales des bobines 36 s'étendant en saillie de part et d'autre du corps de stator 21.

De préférence, l'ensemble de l'interconnecteur 43 est positionné axialement entre les deux extrémités axiales du bobinage 22. Cela permet d'obtenir un ensemble compact suivant les dimensions axiales et radiales.

Afin de faciliter les opérations de soudage, les languettes de connexion 50 dirigées radialement vers l'extérieur du corps 99 de la trace de couplage 47 correspondante présentent des portions d'extrémité 57 se situant suivant une même circonférence, comme cela est illustré par la figure 11. A cet effet, les longueurs radiales des languettes 50 situées sur les traces de couplage 47 internes sont supérieures aux longueurs des languettes de connexion 50 situées sur la trace de couplage 47 la plus externe de l'empilement radial.

Les languettes de connexion 50 comportent en outre un rebord axial 58 de même dimension de manière à être toutes situées à une même hauteur axiale par rapport au corps de stator 21, tel que montré sur la figure 12.

Les languettes de connexion 50 de chaque trace de couplage 47 sont espacées angulairement entre elles de manière régulière. En outre, le décalage angulaire entre deux traces de couplage 47 adjacentes est effectué de façon à obtenir des groupes 60 de trois languettes de connexion 50 appartenant à des traces 47 différentes, tel que montré sur la figure 11. Ces groupes 60 sont espacés de façon régulière suivant la circonférence de l'interconnecteur 43. Il existe une alternance circonférentielle entre les languettes de connexion 50 des différentes traces de couplage 47.

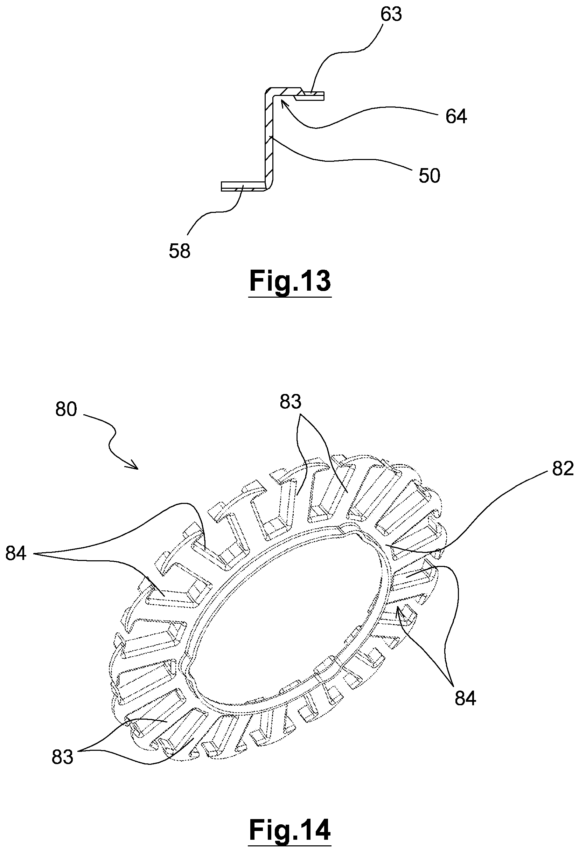

Chaque languette de connexion 50 comporte de préférence une portion rabattable 63 se situant dans le prolongement de la portion d'extrémité 57 de la languette 50, comme on peut le voir sur les figures 12 et 13. Chaque portion rabattable 63 permet d'assurer le maintien d'une portion de couplage 46 correspondante du fil 37.

Afin d'éviter l'endommagement du fil 37 de bobine 36 lors de la déformation de la portion rabattable 63, chaque portion rabattable 63 pourra comporter un soyage 64 visible en figure 13. Ce soyage 64 est défini par un décrochement au niveau de l'extrémité d'ancrage de la portion rabattable 63 avec la languette de connexion 50. Le soyage 64 est applicable dans le cas où les traces sont clipsées, ce qui correspond au mode de réalisation de la figure 4. En revanche, dans le mode de réalisation des figures 3a et 3b correspondant à un surmoulage des traces de couplage 47, les portions rabattables 63 sont dépourvues de soyage 64, notamment pour des raisons d'encombrement. Chaque portion rabattable 63 forme alors un angle droit par rapport à la languette de connexion 50 correspondante.

Afin de faciliter leur réalisation, chaque trace de couplage 47 peut présenter un plan de symétrie P1 passant par une languette de connexion 50. Les traces de couplage 47 présentent toutes en outre une forme identique à un diamètre et une longueur radiale des languettes de connexion 50 près. Il est ainsi possible de standardiser leur fabrication.

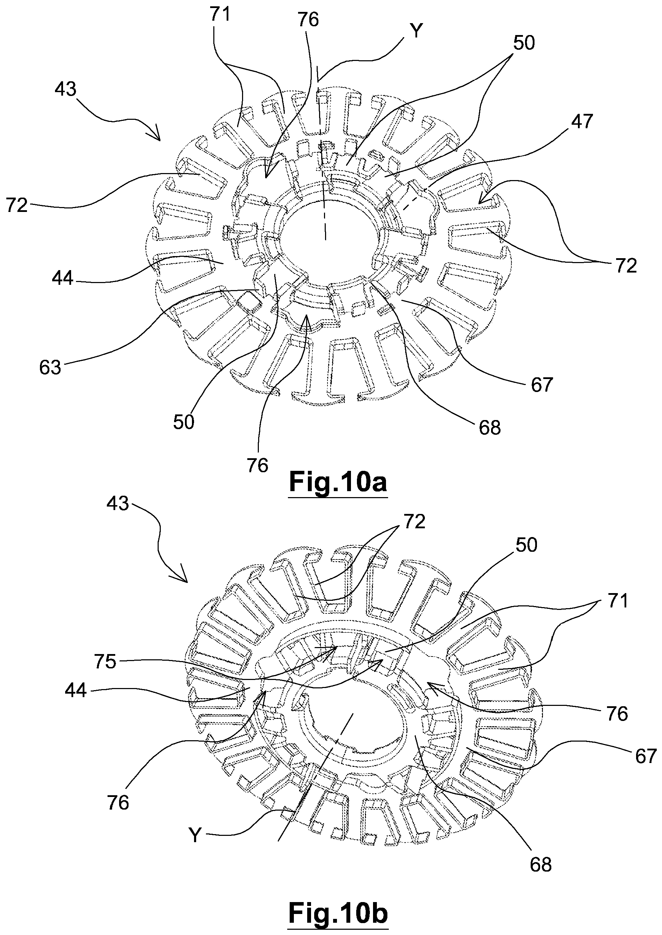

En outre, comme cela est illustré par les figures 10a et 10b, l'interconnecteur 43 forme un isolant de bobines. A cet effet, le corps 44 comporte une portion annulaire centrale 67 destinée à être plaquée contre la culasse 24. Cette portion annulaire centrale 67 se situe dans le prolongement de la portion annulaire 68 de l'interconnecteur 43 comportant les traces de couplage 47.

L'interconnecteur 43 comporte en outre une pluralité de bras 71 issus de la portion annulaire 67. Ces bras 71 s'étendant radialement vers l'extérieur sont destinés à être plaqués chacun contre une face d'extrémité correspondante d'une dent 23 du corps de stator 21. En outre, des parois isolantes 72 situées dans le prolongement des bords longitudinaux des bras 71 sont destinées à être plaquées contre des faces latérales de dents 23 correspondantes.

Des évidements 75 réalisés dans le corps 44 autorisent un passage d'électrodes de soudage de part et d'autre des languettes de connexion 50. Les électrodes déplacées suivant deux directions axiales opposées peuvent ainsi venir pincer l'ensemble languette de connexion 50 - portion de couplage 46 pour permettre la réalisation de la soudure. A cet effet, les évidements 75 réalisés en partie inférieure du corps 44 débouchent vers la face inférieure des languettes 50. La face supérieure des languettes 50 est également dégagée pour la mise en contact entre le fil des portions de couplage 46 et les languettes 50.

Des dégagements 76 réalisés dans le corps 44 autorisent le passage des organes de fixation 33 à l'intérieur des ouvertures des parties en saillie 31 pour fixer le stator 17 sur le dissipateur thermique 16.

En outre, un isolant de bobines 80 montré sur la figure 14 peut être positionné contre une face d'extrémité axiale du corps de stator 21 opposée par rapport à l'interconnecteur 43. Cet isolant de bobines 80 présente une structure analogue à celle des parties de l'interconnecteur 43 ayant une fonction d'isolant électrique. Ainsi, l'isolant de bobines 80 comporte une portion annulaire centrale 82 plaquée contre la face d'extrémité de la culasse 24 opposée à l'interconnecteur 43 et une pluralité de bras 83 issus de la portion annulaire 82. Ces bras 83 s'étendant radialement vers l'extérieur sont destinés à être plaqués chacun contre une face d'extrémité correspondante d'une dent 23 du corps de stator 21. En outre, des parois isolantes 84 situées dans le prolongement des bords longitudinaux des bras 83 sont destinées à être plaquées contre des faces latérales de dents 23 correspondantes de manière à recouvrir au moins partiellement ces faces latérales. A cet effet, les parois isolantes 84 sont dirigées axialement, tout comme les parois isolantes 72, vers l'intérieur du stator 17. Autrement dit, les parois isolantes 72 et 84 sont dirigées axialement les unes vers les autres.

Avantageusement, les parois isolantes 84 de l'isolant de bobines 80 et les parois isolantes 72 de l'interconnecteur 43 sont espacées axialement les unes des autres. Les parois isolantes 84 de l'isolant de bobines 80 et/ou les parois isolantes 72 de l'interconnecteur 43 ont une hauteur inférieure à la moitié de la hauteur axiale du corps de stator 21. Une telle configuration permet de s'adapter à différentes configuration de stator 17 et en particulier à des stators 17 de longueurs axiales différentes pour adresser différentes puissances de machine électrique, sans avoir à modifier la structure de l'interconnecteur 43 ou de l'isolant de bobines 80.

En outre, du fait de la tension du fil 37 entre les deux faces isolantes 72, 84 en vis-à-vis l'une de l'autre, le fil 37 est maintenu à distance des zones des faces latérales des dents 23 qui ne sont pas recouvertes par les parois isolantes 72, 84, en sorte qu'il n'est pas nécessaire d'utiliser un isolant supplémentaire de type papier isolant à l'intérieur des encoches 27 dans l'espace entre les deux parois isolantes 72.

Les traces de couplage 47 sont munies chacune d'un terminal de connexion (non représenté) destiné à être connecté avec un terminal de connexion correspondant du module électronique de commande intégré dans le dissipateur thermique 16. Ce module comporte des interrupteurs, tels que des transistors de type MOS par exemple, commandés pour injecter du courant dans les différentes phases de la machine électrique fonctionnant en mode moteur.

On décrit ci-après, en référence avec les figures 6, 7, et 8, les opérations permettant d'obtenir le bobinage 22 du stator 17. Les bobines 36 sont avantageusement réalisées à partir d'un même fil 37 continu au moyen d'un dispositif à aiguille destiné à faire passer le fil 37 autour des dents 23 du corps de stator 21 via une ouverture d'encoche 87 correspondant à l'espace circonférentiel entre deux pieds de dent 28 adjacents (cf. figure 2). Pour réaliser les spires 88 des bobines 36, l'aiguille réalise des mouvements axiaux de haut en bas combinés à des mouvements circonférentiels alternativement dans un sens puis dans un autre. Un mouvement radial relatif entre l'aiguille et la dent 23 du stator 17 permet de réaliser les différentes couches de spires 88.

Suivant certaines mises en œuvre, l'aiguille réalise l'ensemble des mouvements par rapport à un corps de stator 21 fixe pour obtenir le bobinage 22. Dans d'autres procédés de bobinage, la répartition des mouvements est effectuée entre l'aiguille et le corps de stator 21.

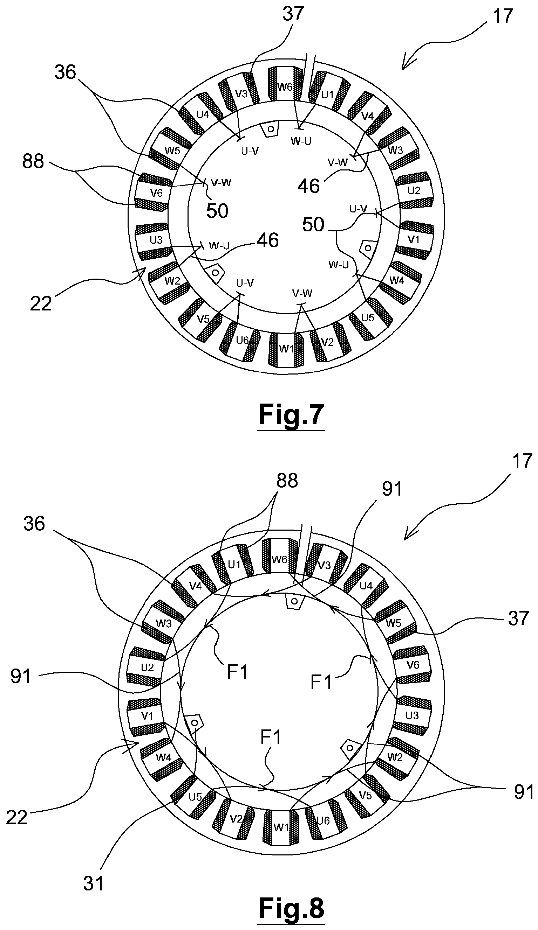

Une fois la première bobine 36 réalisée, par exemple la bobine U1 de la première phase U, l'aiguille se déplace de trois encoches 27 pour réaliser la deuxième bobine U2 de la première phase branchée électriquement en série avec la première bobine U1, tel que montré sur les figures 6 et 7. Autrement dit, on prévoit un espace pour pouvoir réaliser les bobines des deux autres phases entre deux bobines 36 successives d'une même phase, par exemple les bobines V4 et W3. Le déplacement est effectuée de telle façon que la portion de routage 91 entre les deux bobines U1 et U2 de la même phase, ici la phase U, s'étendent du côté de la face opposée à l'interconnecteur 43 (cf. figure 8).

Une fois la deuxième bobine U2 réalisée, le fil 37 passe par une languette de connexion 50 pour assurer le couplage entre la première phase et la deuxième phase (couplage U2-V1 sur la figure) avant d'être inséré dans l'encoche 27 adjacente à la deuxième bobine U2 pour réaliser la première bobine V1 de la deuxième phase. Le couplage est effectué par exemple par soudage de la portion de couplage 46 sur une languette de connexion 50 correspondante après avoir dénudé l'émail de la portion de couplage 46.

Après avoir sauté deux encoches 27 via une portion de routage 91, la deuxième bobine V2 de la deuxième phase est réalisée puis un couplage est effectué, via une portion de couplage 46, avec la première bobine 36 de la troisième phase W1 et ainsi de suite jusqu'à l'obtention d'un bobinage 22 complet.

Autrement dit, le bobinage 22 est obtenu par la réalisation en alternance de deux bobines 36 en série d'une même phase puis d'un couplage entre la dernière bobine de la série avec une première bobine d'une nouvelle série de deux bobines appartenant à une autre phase.

Le couplage entre les bobines 36 de différentes phases est ainsi effectué d'un côté axial du corps de stator 21 via l'interconnecteur 43 et le routage des portions de fil 37 reliant des bobines 36 d'une même phase est effectué, via les portions de routage 91, du côté axial opposé du corps de stator 21 par rapport à l'interconnecteur 43, tel que cela ressort des figures 7 et 8. Il est à noter que sur la figure 8, les flèches F1 indiquent le sens du bobinage et donc l'ordre de réalisation des différentes bobines 36.

Le bobinage 22 peut ainsi être réalisé à partir d'un seul et même fil. Ce fil n'est pas coupé lors des opérations de couplage avec l'interconnecteur 43.

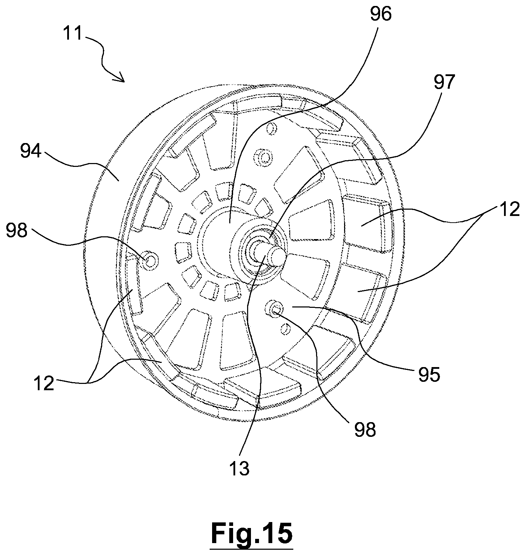

Par ailleurs, comme cela est visible sur la figure 15, le rotor 11 comporte une paroi annulaire d'orientation axiale 94 positionnée autour du stator 17. Cette paroi annulaire 94 est coaxiale avec le stator 17. Cette paroi annulaire 94 s'étend depuis une périphérie externe d'une paroi annulaire d'orientation radiale 95. Cette paroi annulaire d'orientation radiale 95 est prolongée centralement par un manchon 96 dans lequel est monté un moyen de palier 97, tel qu'un roulement à billes ou à aiguille, pour assurer un montage à rotation du rotor 11 sur l'arbre 13 fixé au dissipateur thermique 16. La paroi annulaire d'orientation transversale 95 pourra être ajourée pour autoriser la circulation d'air à l'intérieur de la machine 10. La paroi annulaire d'orientation transversale 95 comporte des moyens de fixation 98 du ventilateur, constitués par exemple par des ouvertures traversantes dans lesquelles sont insérées des organes de fixation, tels que des vis ou des rivets.

La pluralité d'aimants permanents 12 formant les pôles de la machine est fixée sur une périphérie interne de la paroi annulaire d'orientation axiale 94. Les aimants 12, par exemple de forme parallélépipédique, sont de préférence réalisés en ferrite. En variante, ils pourront toutefois être réalisés en terre rare selon les applications et la puissance recherchée de la machine électrique 10. Les aimants 12 pourront également être de nuances différentes, cela dépend des applications.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.
autres selon diverses combinaisons, dans la mesure où elles ne sont pas incompatibles ou exclusives les unes des autres.

## Revendications

1. Machine électrique tournante (10), notamment pour véhicule automobile, comportant :
- un stator (17) comprenant un corps (21) et un bobinage (22) polyphasé,
- un rotor (11) entourant le stator (17) avec présence d'un entrefer entre une périphérie externe du stator (17) et une périphérie interne du rotor (11),
- le rotor (11) comportant 12 pôles,
- le bobinage (22) étant formé par 18 bobines (36), chaque bobine (36) étant enroulée autour d'une dent (23) correspondante du corps de stator (21),
**caractérisée en ce que** les 18 bobines étant formées à partir d'un même fil (37) continu, et **en ce qu'**un couplage entre les bobines (36) de différentes phases est effectué d'un côté axial du corps de stator (21) et un routage de portions de fil (91) reliant des bobines (36) d'une même phase est effectué du côté axial opposé du corps de stator (21).

2. Machine électrique tournante selon la revendication 1, **caractérisée en ce qu'**au moins deux bobines (36) de deux phases différentes sont couplées entre elles par une portion de couplage (46) continue de fil (37) reliant les deux bobines (36) entre elles et connectée à une trace de couplage (47) correspondante d'un interconnecteur (43).

3. Machine électrique tournante selon la revendication 1 ou 2, **caractérisée en ce que** chaque bobine (36) est formée par un fil (37) dont le diamètre est inférieur à 1.5mm.

4. Machine électrique tournante selon l'une quelconque des revendications 1 à 3, **caractérisée en ce que** le bobinage (22) est un bobinage triphasé formé à partir de trois ensembles (40) de bobines (36) couplés en triangle.

5. Machine électrique tournante selon la revendication 4, **caractérisée en ce que** chaque ensemble (40) comporte trois branches (41) montées électriquement en parallèle, chaque branche (41) ayant deux bobines (36) connectées électriquement en série.

6. Machine électrique tournante selon la revendication 4, **caractérisée en ce que** chaque ensemble (40) comporte deux branches (41) montées électriquement en parallèle, chaque branche (41) ayant trois bobines (36) connectées électriquement en série.

7. Machine électrique tournante selon la revendication 4, **caractérisée en ce que** chaque ensemble (40) comporte six bobines (36) connectées électriquement en série.

8. Machine électrique tournante selon la revendication 4, **caractérisée en ce que** chaque ensemble (40) comporte six bobines (36) connectées électriquement en parallèle.

9. Machine électrique tournante selon l'une quelconque des revendications 1 à 8, **caractérisée en ce que** les pôles du rotor (11) sont formés par des aimants permanents (12).

10. Ventilateur pour véhicule automobile **caractérisé en ce qu'**il comporte une machine électrique tournante telle que définie selon l'une quelconque des revendications précédentes.

## Patentansprüche

1. Rotierende elektrische Maschine (10), insbesondere für ein Kraftfahrzeug, umfassend:
- einen Stator (17), der einen Kern (21) und eine mehrphasige Wicklung (22) umfasst,
- einen Rotor (11), der den Stator (17) umgibt, wobei ein Luftspalt zwischen einer äußeren Peripherie des Stators (17) und einer inneren Peripherie des Rotors (11) vorhanden ist,
- wobei der Rotor (11) 12 Pole aufweist,
- wobei die Wicklung (22) aus 18 Spulen (36) gebildet ist, wobei jede Spule (36) um einen entsprechenden Zahn (23) des Statorkerns (21) gewickelt ist,
**dadurch gekennzeichnet, dass** die 18 Spulen aus einem gleichen kontinuierlichen Draht (37) gebildet sind, und dadurch, dass die Kopplung zwischen Spulen (36) verschiedener Phasen auf der axialen Seite des Statorkerns (21) durchgeführt wird und die Führung von Drahtabschnitten (91), die Spulen (36) derselben Phase verbinden, auf der gegenüberliegenden axialen Seite des Statorkerns (21) durchgeführt wird.

2. Rotierende elektrische Maschine nach Anspruch 1, **dadurch gekennzeichnet, dass** mindestens zwei Spulen (36) von zwei verschiedenen Phasen durch einen kontinuierlichen Kopplungsabschnitt (46) des Drahts (37) miteinander gekoppelt sind, der die beiden Spulen (36) miteinander verbindet und mit einer Kopplungsspur (47) verbunden ist, die einem Verbindungselement (43) entspricht.

3. Rotierende elektrische Maschine nach Anspruch 1 oder 2, **dadurch gekennzeichnet, dass** jede Spule (36) aus einem Draht (37) mit einem Durchmesser von weniger als 1,5 mm gebildet ist.

4. Rotierende elektrische Maschine nach einem der Ansprüche 1 bis 3, **dadurch gekennzeichnet, dass** die Wicklung (22) eine Dreiphasenwicklung ist, die aus drei Sätzen (40) von im Dreieck gekoppelten Spulen (36) gebildet ist.

5. Rotierende elektrische Maschine nach Anspruch 4, **dadurch gekennzeichnet, dass** jeder Satz (40) drei elektrisch parallel geschaltete Zweige (41) umfasst, wobei jeder Zweig (41) zwei elektrisch in Reihe geschaltete Spulen (36) aufweist.

6. Rotierende elektrische Maschine nach Anspruch 4, **dadurch gekennzeichnet, dass** jeder Satz (40) zwei elektrisch parallel geschaltete Zweige (41) umfasst, wobei jeder Zweig (41) drei elektrisch in Reihe geschaltete Spulen (36) aufweist.

7. Rotierende elektrische Maschine nach Anspruch 4, **dadurch gekennzeichnet, dass** jeder Satz (40) sechs elektrisch in Reihe geschaltete Spulen (36) umfasst.

8. Rotierende elektrische Maschine nach Anspruch 4, **dadurch gekennzeichnet, dass** jeder Satz (40) sechs elektrisch parallel geschaltete Spulen (36) umfasst.

9. Rotierende elektrische Maschine nach einem der Ansprüche 1 bis 8, **dadurch gekennzeichnet, dass** die Pole des Rotors (11) aus Permanentmagneten (12) gebildet sind.

10. Lüfter für ein Kraftfahrzeug, **dadurch gekennzeichnet, dass** er eine rotierende elektrische Maschine gemäß einem der vorhergehenden Ansprüche umfasst.

## Claims

1. Rotating electrical machine (10), particularly for an automobile vehicle, comprising:
- a stator (17) comprising a core (21) and a polyphase winding (22),
- a rotor (11) surrounding the stator (17) with the presence of an air gap between an external periphery of the stator (17) and an internal periphery of the rotor (11),
- the rotor (11) comprising 12 poles,
- the winding (22) being formed by 18 coils (36), each coil (36) being wound around a corresponding tooth (23) of the stator core (21),
**characterized in that** the 18 coils are formed from a same continuous wire (37), and **in that** coupling between coils (36) of different phases is performed on the axial side of the stator core (21) and routing of wire portions (91) connecting coils (36) of a same phase is performed on the opposite axial side of the stator core (21).

2. Rotating electrical machine according to claim 1, **characterized in that** at least two coils (36) of two different phases are coupled together by a continuous coupling portion (46) of wire (37) connecting the two coils (36) between them and connected to a coupling trace (47) corresponding to an interconnector (43).

3. Rotating electrical machine according to claim 1 or 2, **characterized in that** each coil (36) is formed by a wire (37) with a diameter less than 1.5mm.

4. Rotating electrical machine according to any one of claims 1 to 3, **characterized in that** the winding (22) is a three-phase winding formed from three sets (40) of coils (36) coupled in a triangle.

5. Rotating electrical machine according to claim 4, **characterized in that** each set (40) comprises three branches (41) electrically connected in parallel, each branch (41) having two coils (36) electrically connected in series.

6. Rotating electrical machine according to claim 4, **characterized in that** each set (40) comprises two branches (41) electrically connected in parallel, each branch (41) having three coils (36) electrically connected in series.

7. Rotating electrical machine according to claim 4, **characterized in that** each set (40) comprises six coils (36) electrically connected in series.

8. Rotating electrical machine according to claim 4, **characterized in that** each set (40) comprises six coils (36) electrically connected in parallel.

9. Rotating electrical machine according to any one of claims 1 to 8, **characterized in that** the poles of the rotor (11) are formed by permanent magnets (12).

10. Fan for an automobile vehicle **characterized in that** it comprises a rotating electrical machine as defined according to any one of the preceding claims.
